(19) Europäisches Patentamt
European Patent Office
Office européen des brevets

(11) **EP 3 883 835 B1**

(12) **EUROPÄISCHE PATENTSCHRIFT**

(45) Veröffentlichungstag und Bekanntmachung des Hinweises auf die Patenterteilung:
**09.11.2022  Patentblatt 2022/45**

(21) Anmeldenummer: **20702742.6**

(22) Anmeldetag: **15.01.2020**

(51) Internationale Patentklassifikation (IPC):
**B61D 27/00** (2006.01)  **B61C 17/04** (2006.01)
**B60H 1/26** (2006.01)  **B60H 1/00** (2006.01)
**F24F 11/75** (2018.01)  **F24F 11/89** (2018.01)

(52) Gemeinsame Patentklassifikation (CPC):
**B61D 27/0009; B60H 1/00371; B60H 1/26; B61C 17/04; B61D 27/0072; F24F 11/75; F24F 11/89;** Y02T 30/00

(86) Internationale Anmeldenummer:
**PCT/EP2020/050853**

(87) Internationale Veröffentlichungsnummer:
**WO 2020/160881 (13.08.2020 Gazette 2020/33)**

(54) **KÜHLGERÄT FÜR EIN FAHRZEUG UND FAHRZEUG**

COOLING APPARATUS FOR A VEHICLE AND VEHICLE

APPAREIL DE REFROIDISSEMENT POUR UN VÉHICULE ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.02.2019  DE 102019201455**

(43) Veröffentlichungstag der Anmeldung:
**29.09.2021  Patentblatt 2021/39**

(73) Patentinhaber: **Siemens Mobility GmbH 81739 München (DE)**

(72) Erfinder: **GAGEIK, Manuel Alexander 45472 Mülheim an der Ruhr (DE)**

(56) Entgegenhaltungen:
**WO-A1-2017/060032    FR-A1- 2 434 722**

**Beschreibung**

Die Erfindung betrifft ein Kühlgerät für ein Fahrzeug, welches eine Einlassöffnung, einen Kanal und eine im Kanal angeordnete Temperiereinheit aufweist. Eine Strömungsrichtung für Luft durch den Kanal hindurch ist vorgegeben. An der Einlassöffnung liegt von außen ein Umgebungsdruck an. Im Kanal in Strömungsrichtung vor der Temperiereinheit herrscht ein Eingangsdruck und im Kanal in Strömungsrichtung nach der Temperiereinheit herrscht ein Ausgangsdruck. Es sind ein an der Einlassöffnung angeordnetes Ventil und ein mit dem Ventil mechanisch gekoppeltes Flächenelement vorgesehen und das Flächenelement ist unter Verwendung zumindest einer Feder derart beweglich positioniert, dass das mit dem Flächenelement gekoppelte Ventil zwischen einer Offenstellung und einer Geschlossenstellung stufenlos verstellbar.

Ein solches Kühlgerät ist beispielsweise aus der WO 2017/060032 A1 bekannt.

In bisher üblichen Kühlgeräten ist im Kanal in der Regel ein Lüfter angeordnet. Der Lüfter kann eine Strömung von Luft durch den Kanal hindurch erzwingen.

Wird das Kühlgerät in einem Fahrzeug verwendet, so ist der Umgebungsdruck üblicherweise abhängig von der Geschwindigkeit des Fahrzeugs. In diesem Fall hat der Umgebungsdruck einen statischen Anteil und einen dynamischen Anteil. Der Eingangsdruck, der im Kanal zwischen der Einlassöffnung und der Temperiereinheit herrscht, ist wiederum abhängig von dem Umgebungsdruck und damit auch von der Geschwindigkeit des Fahrzeugs. Auch zusätzlicher (Seiten-)Wind hat Einfluss auf den Eingangsdruck. Insbesondere kann Luft aus der Umgebung durch den Seitenwind durch die Einlassöffnung in den Kanal gedrückt werden, sodass der Eingangsdruck erhöht wird.

Ist der Eingangsdruck zu hoch, so kann eine kritische Situation eintreten, bei der der Lüfter durch den Luftstrom angetrieben wird. Da der Lüfter in der Regel nicht für diese Situation ausgelegt ist, ist der Antrieb des Lüfters durch den Luftstrom zu vermeiden, um Schäden am Lüfter und/oder an der Elektronik zu vermeiden.

Eine Aufgabe der Erfindung ist es, ein verbessertes Kühlgerät für ein Fahrzeug bereitzustellen.

Die Aufgabe wird gelöst durch ein Kühlgerät der eingangs genannten Art, bei dem erfindungsgemäß an einer Seite des Flächenelements der Eingangsdruck und an der anderen Seite des Flächenelements der Ausgangsdruck anliegt.

Auf diese Weise kann sich zwischen den auf das Flächenelement wirkenden Kräften ein Gleichgewicht einstellten, sodass ein Druckunterschied zwischen dem Eingangsdruck und dem Ausgangsdruck zumindest im Wesentlichen konstant bleibt, falls der Umgebungsdruck über einem vorgegebenen Grenzwert liegt.

Auf diese Weise kann der Druckunterschied zwischen dem Eingangsdruck und dem Ausgangsdruck geregelt werden. Das heißt, auf diese Weise können die Druckverhältnisse innerhalb des Kanals geregelt werden.

Auf diese Weise können innerhalb des Kanals optimale Druckverhältnisse hergestellt werden.

Bei einem konstanten Ausgangsdruck kann mittels der Erfindung der Eingangsdruck konstant gehalten werden, unabhängig davon wie hoch der Umgebungsdruck ist - vorausgesetzt, der Umgebungsdruck ist höher als der vorgegebene Grenzwert.

Ferner kann mittels der Erfindung der Eingangsdruck an einen sich veränderten Ausgangsdruck angepasst werden. Insbesondere werden die Druckverhältnisse mittels der Erfindung selbstständig reguliert. Auf eine aktive Steuerung und/oder Regelung, beispielsweise mittels Sensoren und/oder Aktoren, kann damit verzichtet werden.

Weiter ist zur Regelung der Druckverhältnisse innerhalb des Kanals mittels der Erfindung keine Energie notwendig.

Ferner kann - zumindest falls der Umgebungsdruck über dem vorgegebenen Grenzwert liegt - auf einen Lüfter zum Erzwingen einer Luftströmung durch den Kanal hindurch verzichtet werden. Falls das Kühlgerät einen Lüfter aufweist, kann dieser - zumindest falls der Umgebungsdruck über dem vorgegebenen Grenzwert liegt - deaktiviert sein. Auf diese Weise kann der Energieaufwand und/oder der Steuerungsaufwand reduziert werden.

Das Kühlgerät kann zur Kühlung einer technischen Einheit verwendet werden. Beispielsweise kann das Kühlgerät zur Kühlung eines Stromrichters, einer Steuerung, usw. verwendet werden.

Ferner kann das Kühlgerät zur Klimatisierung eines Innenraums verwendet werden. In diesem Fall kann das Kühlgerät als Klimagerät ausgeführt sein.

Vorzugsweise liegt der Umgebungsdruck außerhalb des Kanals an der Einlassöffnung an.

Vorzugsweise ist der von außen an der Einlassöffnung anliegende Umgebungsdruck, kurz: Umgebungsdruck, abhängig vom Atmosphärendruck. Weiter ist der Umgebungsdruck vorzugsweise anhängig von einer Anströmung der Einlassöffnung. Auf diese Weise kann der Umgebungsdruck einen statischen Anteil und einen dynamischen Anteil aufweisen.

Wenn ein Druckunterschied zwischen dem Eingangsdruck und dem Ausgangsdruck zumindest im Wesentlichen konstant bleibt, dann schwankt der Druckunterschied vorzugsweise um maximal 5%, insbesondere um maximal 1%, besonders bevorzugt um maximal 0,1%.

Wenn ein Druckunterschied zwischen dem Eingangsdruck und dem Ausgangsdruck zumindest im Wesentlichen konstant bleibt, dann kann der Druckunterschied zumindest in 90% der Zeit, in der der Umgebungsdruck über dem vorgegebenen Grenzwert liegt, konstant sein, insbesondere in mindestens 95% dieser Zeit, besonders bevorzugt in mindestens 99% dieser Zeit. Auf diese Weise kann der Druckunterschied zwischen dem Eingangsdruck und dem Ausgangsdruck zumindest langfristig konstant sein/bleiben.

Aufgrund des an der Einlassöffnung angeordneten Ventils kann/können auf ein Einlassgitter und/oder auf verstellbare Einlassklappen verzichtet werden. Auch auf eine Steuerung von Einlassklappen kann damit verzichtet werden.

Zweckmäßigerweise ist die Einlassöffnung eine Öffnung zur Zufuhr von Frischluft. Das heißt, dass über die Einlassöffnung vorzugsweise Frischluft aus der Umgebung in den Kanal geführt werden kann.

Es ist zweckmäßig, wenn der Eingangsdruck größer ist als der Ausgangsdruck.

Als Temperiereinheit kann eine Einheit verstanden werden, die zur Temperierung verwendet wird. Insbesondere kann die Temperiereinheit eine Kühlung ermöglichen. Die Temperiereinheit kann beispielsweise als ein Wärmetauscher ausgeführt sein.

Die Temperiereinheit weist vorzugsweise einen Strömungswiderstand auf, durch welchen es bei Strömung von Luft durch den Kanal hindurch über der Temperiereinheit zu einem Druckabfall kommt. Zweckmäßigerweise ist der Druckunterschied zwischen dem Eingangsdruck und dem Ausgangsdruck mindestens so hoch wie der Druckabfall über der Temperiereinheit.

Weiter ist es zweckmäßig, wenn der Umgebungsdruck größer als der Eingangsdruck ist.

Das an der Einlassöffnung angeordnete Ventil weist vorzugsweise einen Strömungswiderstand auf, durch welchen es bei Strömung von Luft durch den Kanal hindurch über dem Ventil zu einem Druckabfall kommt. Zweckmäßigerweise ist der Druckunterschied zwischen dem Umgebungsdruck und dem Eingangsdruck mindestens so hoch wie der Druckabfall über dem Ventil.

Der Strömungswiderstand des Ventils kann von der Stellung des Ventils abhängig sein. Vorzugsweise ist der Strömungswiderstand des Ventils minimal, wenn das Ventil maximal geöffnet ist. Der Grenzwert kann entsprechend gewählt werden. Der Grenzwert wird vorteilhafterweise derart gewählt, dass dann, wenn der Umgebungsdruck dem Grenzwert entspricht, der Druckunterschied zwischen dem Umgebungsdruck und dem Eingangsdruck mindestens so hoch ist wie der Druckabfall über dem Ventil, wenn dieses vollständig geöffnet ist.

Ferner kann der Grenzwert abhängig von dem Ausgangsdruck gewählt werden. Weiter kann der Grenzwert abhängig von dem Strömungswiderstand der Temperiereinheit, d h. von dem Druckabfall über der Temperiereinheit, gewählt werden.

Insbesondere wird der Grenzwert anhängig vom Aufbau des Kühlgeräts vorgegeben. Weiter kann der Grenzwert abhängig von Randbedingungen gewählt werden.

Sinnvollerweise umfasst die Temperiereinheit zumindest einen Wärmetauscher. Weiter kann die Temperiereinheit einen Luftfilter aufweisen. Außerdem kann die Temperiereinheit eine Ent- und/oder Befeuchtungseinheit aufweisen.

Zwischen den auf das Flächenelement wirkenden Kräften herrscht vorzugsweise ein Gleichgewicht, sodass ein Druckunterschied zwischen dem Eingangsdruck und dem Ausgangsdruck zumindest im Wesentlichen konstant bleibt, falls der Umgebungsdruck über einem vorgegebenen Grenzwert liegt.

Vorzugsweise ist das Ventil in seiner Offenstellung vollständig geöffnet. Weiter ist es vorteilhaft, wenn das Ventil in seiner Geschlossenstellung geschlossen, d. h. vollständig geschlossen, ist.

Zweckmäßigerweise hängt die Stellung des Ventils von den auf das Flächenelement wirkenden Kräften ab.

Auf das Flächenelement wirkt zweckmäßigerweise die Federkraft der zumindest einen Feder. Weiter wirken auf das Flächenelement zweckmäßigerweise von dem Eingangsdruck und vom dem Ausgangsdruck erzeugte Kräfte, insbesondere Druckkräfte.

Es ist vorteilhaft, wenn die Stellung des Ventils vom Umgebungsdruck abhängt.

Die Stellung des Ventils hängt zweckmäßigerweise vom Eingangsdruck ab. Vorzugsweise ist der Eingangsdruck direkt von dem Umgebungsdruck abhängig. Auf diese Weise kann die Stellung des Ventils vom Umgebungsdruck abhängen.

Auf diese Weise kann bei einem sich ändernden Umgebungsdruck die Stellung des Ventils derart angepasst werden, dass ein Druckunterschied zwischen dem Eingangsdruck und dem Ausgangsdruck konstant bleibt.

Weiter kann die Stellung des Ventils vom Ausgangsdruck abhängen.

Auf diese Weise kann bei einem sich ändernden Ausgangsdruck die Stellung des Ventils derart angepasst werden, dass ein Druckunterschied zwischen dem Eingangsdruck und dem Ausgangsdruck konstant bleibt.

Es ist vorteilhaft, wenn das Ventil ein Luftleitelement aufweist. Zweckmäßigerweise ist das Luftleitelement dazu eingerichtet, an der Einlassöffnung entlang strömende Luft in den Kanal hineinzuführen. Das heißt, dass mittels dem Luftleitelement an der Einlassöffnung entlang strömende Luft in den Kanal hineingeführt werden kann. Auf diese Weise kann der Strömungswiderstand des Ventils verringert werden. Weiter können auf diese Weise die Strömungsverhältnisse verbessert werden.

Das Flächenelement kann beispielsweise eine Membran sein.

Die auf die Membran wirkenden Kräfte können beispielsweise eine Verformung, insbesondere eine Wölbung, der Membran bewirken. Auf diese Weise kann die Membran beweglich sein. Zweckmäßigerweise ist die Stärke der Verformung, insbesondere der Wölbung, abhängig von der Stärke der auf die Membran wirkenden Kräfte.

Weiter kann das Flächenelement beispielsweise ein Kolben sein. Vorzugsweise ist der Kolben in einem Zylinder beweglich angeordnet. Sinnvollerweise ist der Zylinder ein Zylinder des Kühlgeräts. Zweckmäßigerweise kann sich der Kolben in einer Dimension, insbesondere in Längsrichtung des Zylinders, bewegen.

Die auf den Kolben wirkenden Kräfte können eine Positionierung des Kolbens im Zylinder bewirken. Zweckmäßigerweise ist die Position des Kolbens abhängig von der Stärke der auf den Kolben wirkenden Kräfte.

Das Flächenelement kann unter Verwendung von zwei Federn beweglich positioniert sein.

Vorzugsweise sind die zwei Federn gespannt. Das heißt, dass das Flächenelement unter Verwendung von zwei gespannten Federn beweglich positioniert sein kann. Eine gespannte Feder kann beispielsweise unter Zugspannung stehen, d. h. gedehnt sein. Weiter kann eine gespannte Feder beispielsweise unter Druckspannung stehen, d. h. gestaucht sein.

Es ist vorteilhaft, wenn die rückstellenden Kräfte der Federn parallel zueinander verlaufen. Beispielsweise können die rückstellenden Kräfte der Federn in einander entgegengesetzte Richtungen verlaufen.

Das Kühlgerät kann einen Lüfter aufweisen. Der Lüfter kann im Kanal in Strömungsrichtung nach der Temperiereinheit angeordnet sein. Vorzugsweise ist der Lüfter zuschaltbar, insbesondere falls der Umgebungsdruck niedriger ist als der vorgegebene Grenzwert.

Falls der Umgebungsdruck höher ist als der vorgegebene Grenzwert, ist vorzugsweise der Lüfter deaktiv, d. h. nicht zugeschaltet. Auf diese Weise kann Energie gespart werden.

Falls der Umgebungsdruck niedriger ist als ein vorgegebener Grenzwert, ist der Lüfter vorzugsweise zugeschaltet, d. h. aktiv. Bei zugeschaltetem Lüfter herrscht vorzugsweise zwischen der Temperiereinheit und dem Lüfter ein Niedrigdruck, der gegenüber dem in Strömungsrichtung nach dem Lüfter herrschenden Ausgangsdruck verringert ist.

Auf diese Weise kann der Druckabfall über der Temperiereinheit aufrecht gehalten werden. Insbesondere kann auf diese Weise ein Druckunterschied zwischen dem Eingangsdruck und dem Niedrigdruck (insbesondere statt dem Ausgangsdruck) aufrecht gehalten werden.

Weiter kann das Kühlgerät eine Umluftöffnung aufweisen. Vorzugsweise ist die Umluftöffnung dazu eingerichtet, Umluft in den Kanal zu führen. Das heißt, dass über die Umluftöffnung Umluft in den Kanal geführt werden kann.

Vorzugsweise ist die Umluftöffnung im Kanal angeordnet. Beispielsweise kann die Umluftöffnung in Strömungsrichtung nach der Temperiereinheit angeordnet sein. Es ist vorteilhaft, wenn, falls das Kühlgerät einen Lüfter aufweist, die Umluftöffnung vor dem Lüfter angeordnet ist. Prinzipiell könnte die Umluftöffnung auch an anderer Position im Kanal angeordnet sein.

Unter Verwendung der Umluftöffnung kann das Kühlgerät mit Frischluft, mit Umluft oder beidem arbeiten.

Das Kühlgerät kann weiter eine Schließvorrichtung aufweisen. Vorzugsweise ist die Einlassöffnung unter Verwendung der Schließvorrichtung verschließbar, insbesondere falls das Kühlgerät außer Betrieb ist.

Ferner ist die Erfindung gerichtet auf ein Fahrzeug mit dem zuvor genannten Kühlgerät und/oder eine seiner Weiterbildungen.

Insbesondere kann das Fahrzeug ein Schienenfahrzeug sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Kühlgerät und dem erfindungsgemäßen Fahrzeug kombinierbar.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:

FIG 1     ein Kühlgerät mit einem Ventil und einer mit dem Ventil gekoppelten Membran,

FIG 2     ein weiteres Kühlgerät mit einem Ventil und einem mit dem Ventil gekoppelten Kolben,

FIG 3    das Kühlgerät aus FIG 2, wobei das Ventil maximal geöffnet ist,

FIG 4    das Kühlgerät aus FIG 2, wobei das Ventil geschlossen ist,

FIG 5    ein anderes Ventil für das Kühlgerät aus FIG 1 oder für das weitere Kühlgerät aus FIG 2, und

FIG 6    Fahrzeug mit dem Kühlgerät aus FIG 2.

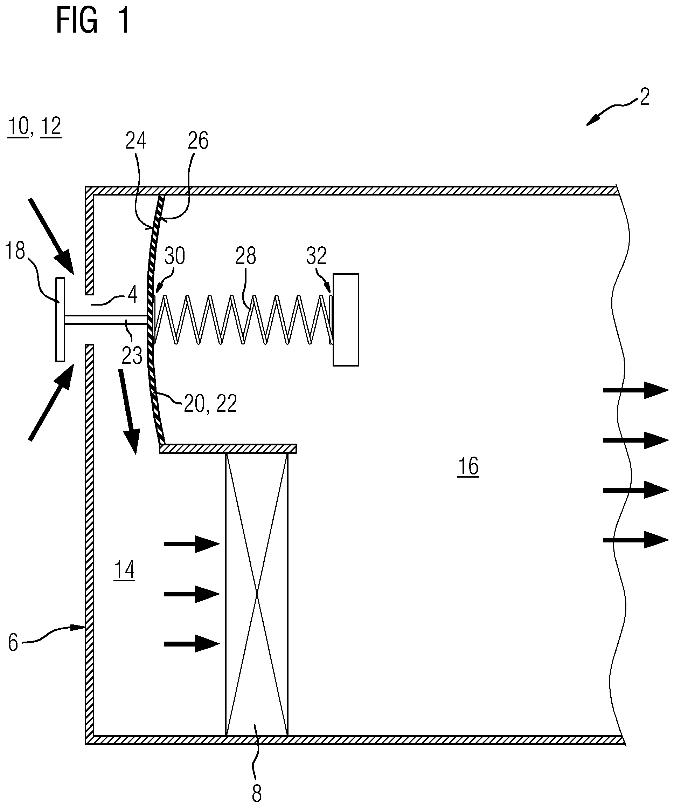

FIG 1 zeigt schematisch ein Kühlgerät 2 für ein Fahrzeug.

Das Kühlgerät 2 weist eine Einlassöffnung 4, einen Kanal 6 und eine im Kanal 6 angeordnete Temperiereinheit 8 auf.

Eine Strömungsrichtung für Luft durch den Kanal 6 hindurch ist vorgegeben. Die Strömungsrichtung ist derart vorgegeben, dass Luft - insbesondere aus der Umgebung 10 - durch die Einlassöffnung 4 in den Kanal 6 geführt wird und dann durch die Temperiereinheit 8 hindurchgeführt wird. In der Temperiereinheit 8 wird die Luft zweckmäßigerweise temperiert. Nach der Temperiereinheit 8 wird die Luft in Richtung eines Auslasses (nicht dargestellt) geführt. Die Luftströmung ist in FIG 1 mittels Pfeilen angedeutet.

Die Temperiereinheit 8 kann beispielsweise eine technische Einheit kühlen (nicht dargestellt). Beispielsweise kann die Temperiereinheit im direkten Kontakt mit dieser technischen Einheit sein. Im Fall der Kühlung einer technischen Einheit kann die Luft aus dem Kanal 6 über den Auslass wieder in die Umgebung 10 gelangen.

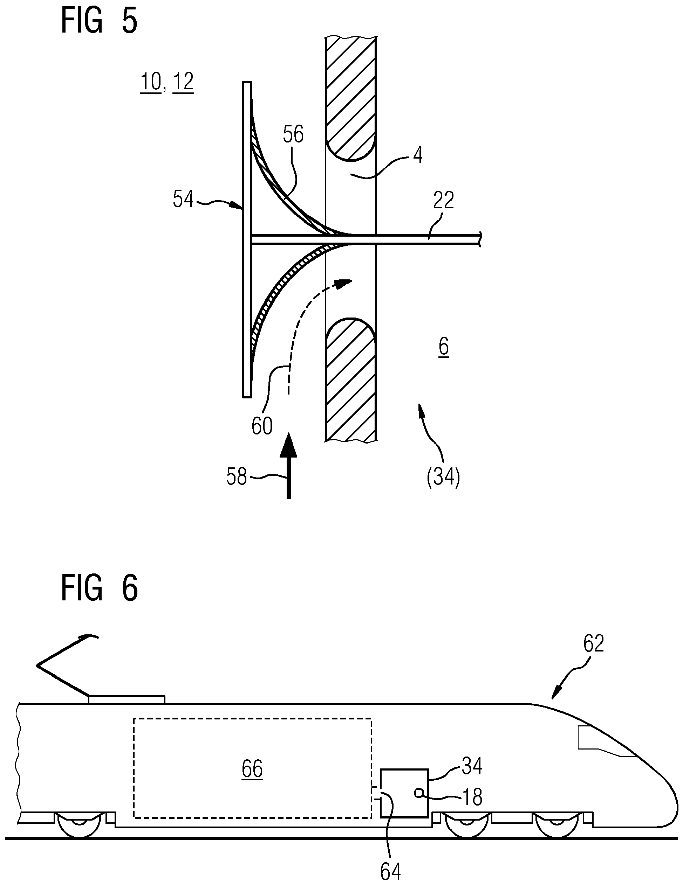

Weiter kann die Temperiereinheit 8 die durch den Kanal 6 geführte Luft kühlen (vgl. FIG 6). In diesem Fall kann das Kühlgerät 2 als Klimagerät ausgeführt sein. Über den Auslass kann die gekühlte Luft in einen zu klimatisierenden Innenraum (beispielsweise eines Fahrzeugs) gelangen (vgl. FIG 6).

An die Einlassöffnung 4 liegt von außen ein Umgebungsdruck an. D. h., dass außerhalb des Kanals 6, also in der Umgebung 10 des Kühlgeräts 2, an die Einlassöffnung 4 ein Umgebungsdruck 12 anliegt. Wenn das Kühlgerät 2 in einem Fahrzeug verbaut ist (vgl. FIG 6), dann ist der Umgebungsdruck 12 von der Geschwindigkeit des Fahrzeugs abhängig. Weiter kann der Umgebungsdruck von Windbedingungen abhängig sein.

Im Kanal 6 in Strömungsrichtung vor der Temperiereinheit 8, d. h. im Kanal 6 zwischen der Einlassöffnung 4 und der Temperiereinheit 8, herrscht ein Eingangsdruck 14. Weiter herrscht im Kanal 6 in Strömungsrichtung nach der Temperiereinheit 8 ein Ausgangsdruck 16.

Das Kühlgerät 2 umfasst ein an der Einlassöffnung 4 angeordnetes Ventil 18 und ein mit dem Ventil 18 mechanisch gekoppeltes Flächenelement 20. Die mechanische Kopplung zwischen dem Ventil und dem Flächenelement erfolgt über ein steifes Kopplungselement 23. Das Kopplungselement 23 kann beispielsweise als eine Stange bzw. als ein Stift ausgeführt sein.

In diesem Ausführungsbeispiel ist das Flächenelement 20 als Membran 22 ausgebildet.

An einer Seite 24 des Flächenelements 20 liegt der Eingangsdruck 14 und an der anderen Seite 26 des Flächenelements 20 liegt der Ausgangsdruck 16 an. Die erstgenannte Seite 24 des Flächenelements 20, an der der Eingangsdruck 14 anliegt, und die andere Seite 26, an der der Ausgangsdruck 16 anliegt, sind einander entgegengesetzte Seiten 24, 26 des Flächenelements 20.

Das Flächenelement 20 ist unter Verwendung einer Feder 28 beweglich positioniert. Dabei ist die Feder 28 an seinem ersten Ende 30 mit dem Flächenelement 20 verbunden. Weiter ist die Feder 28 an seinem dem ersten Ende 30 entgegengesetzten zweiten Ende 32 räumlich fixiert. Die Feder 28 kann entlang ihrer Längsrichtung gestaucht und/oder getreckt werden. Auf diese Weise kann das Flächenelement zeichnungsgemäß nach rechts und/oder nach links bewegt werden. In diesem Beispiel, bei dem das Flächenelement 20 als Membran 22 ausgeführt ist, kann bei der Bewegung der Membran 22 eine Wölbung der Membran 22 verändert werden.

In diesem Beispiel ist die Feder 28 in demjenigen Bereich angeordnet, in dem der Ausgangsdruck 16 anliegt. Prinzipiell könnte die Feder 28 aber auch in demjenigen Bereich angeordnet, in dem der Eingangsdruck 14 anliegt (nicht gezeigt).

Zusätzlich zur Feder 28 könnte ein Dämpfungselement vorgesehen werden, um eventuelle Federschwingungen zu vermeiden (nicht gezeigt).

Aufgrund der beweglichen Positionierung des Flächenelements 20 ist das mit dem Flächenelement 20 mechanisch gekoppelte Ventil 18 zwischen einer Offenstellung und einer Geschlossenstellung stufenlos verstellbar.

Das Ventil 18 ist in seiner Offenstellung vollständig geöffnet. Weiter ist das Ventil 18 in seiner Geschlossenstellung geschlossen, d. h. vollständig geschlossen.

In FIG 1 ist das Ventil 18 in einer Stellung zwischen der Offenstellung und der Geschlossenstellung gezeigt. Das heißt, dass das Ventil 18 in FIG 1 teilweise geöffnet ist.

Auf das als Membran 22 ausgebildete Flächenelement 20 wirken eine Federkraft der Feder 28 und von dem Eingangsdruck 14 und dem Ausgangsdruck 16 verursachte (Druck-)Kräfte. In diesem Beispiel wirken die Federkraft der Feder 28 und die Druckkraft des Ausgangsdrucks 16 gegen die Druckkraft des Eingangsdrucks 14.

Die auf die Membran 22 wirkenden Kräfte können - wie hier dargestellt - eine Wölbung der Membran 22 bewirken. Zweckmäßigerweise ist die Stärke der Wölbung abhängig von der Stärke der auf die Membran 22 wirkenden Kräfte.

Da das als Membran 22 ausgebildete Flächenelement 20 mit dem Ventil 18 (mechanisch) gekoppelt ist, hängt die Stellung des Ventils 18 von den auf das Flächenelement 20 wirkenden Kräften ab.

Insbesondere hängt die Stellung des Ventils 18 vom Umgebungsdruck 12 und vom Ausgangsdruck 16 ab.

Zwischen den auf das Flächenelement 20 wirkenden Kräften stellt sich ein Gleichgewicht ein, sodass ein Druckunterschied zwischen dem Eingangsdruck 14 und dem Ausgangsdruck 16 konstant bleibt, falls der Umgebungsdruck 12 über dem vorgegebenen Grenzwert liegt.

Insbesondere stellt sich ein Gleichgewicht zwischen der Federkraft und den Druckkräften ein.

Das Gleichgewicht stellt sich in FIG 1 derart ein, dass eine Summe aus der Federkraft der Feder 28 und der Druckkraft des Ausgangsdrucks 16 genau so groß ist wie die Druckkraft des Eingangsdrucks 14.

Das heißt, dass zwischen den auf das Flächenelement 20 wirkenden Kräften ein Gleichgewicht herrscht, sodass der Druckunterschied zwischen dem Eingangsdruck 14 und dem Ausgangsdruck 16 konstant bleibt, falls der Umgebungsdruck 12 über dem vorgegebenen Grenzwert liegt.

Das Kräftegleichgewicht lässt sich als Formel wie folgt formulieren:

$$c_1 \cdot x_1 \ + \ p_2 \cdot A \ = \ p_3 \cdot A,$$

wobei $c_1$ die Federkonstante des im Bereich des Eingangsdrucks 14 angeordneten Feder 28, $x_1$ die Auslenkung dieser Feder 28, $p_2$ der Eingangsdruck 14 und A der Flächeninhalt einer Seite des Flächenelements 20 ist. Weiter ist $p_3$ der Ausgangsdruck 16.

Aus der oben genannten Formel für das Kräftegleichgewicht kann der Druckunterschied $\Delta p$ zwischen dem Eingangsdruck $p_2$ 14 und dem Ausgangsdruck $p_3$ 16 berechnet werden:

$$\Delta p \ = \ p_3 \ - \ p_2 \ = \ (c_1 \cdot x_1)/A$$

Da der Strömungswiderstand der Temperiereinheit konstant ist, kann ein konstanter Druckabfall über der Temperiereinheit angenommen werden. Die Auslenkung $x_1$ der Feder 28 stellt sich entsprechend ein. Auf diese Weise werden die Druckverhältnisse im Kanal 6 mittels der Anordnung aus dem Flächenelement 20 und den beiden Federn 28 selbstständig reguliert.

Steigt ausgehend von FIG 1 beispielsweise der Umgebungsdruck 12 (bei sonst gleichbleibenden Bedingungen) an, so wird zunächst der Eingangsdruck 14 größer. Dadurch vergrößert sich die durch den Eingangsdruck 14 von links auf das Flächenelement wirkende Kraft, sodass sich die Gleichgewichtslage der Membran 22 etwas nach rechts verschiebt (d. h. die Wölbung der Membran 22 in FIG 1 nimmt ab, die Ausdehnung der Feder 28 verringert sich). Durch die Bewegung der Membran 22 wird das Ventil 18 etwas mehr geschlossen. Auf diese Weise wird der Strömungswiderstand des Ventils 18 erhöht. Durch das teilweise Schließen des Ventils 18 sinkt der Eingangsdruck 14 wieder ab. Nach einer gewissen Zeit (insbesondere im SekundenBereich oder weniger) oder instantan stellt sich auf diese Weise ein neues Gleichgewicht ein, bei welchem der ursprüngliche Druckunterschied zwischen dem Eingangsdruck 14 und dem Ausgangsdruck 16 wieder hergestellt ist. Auf diese Weise kann der Druckunterschied zwischen dem Eingangsdruck 14 und dem Ausgangsdruck 16 - zumindest im Wesentlichen, insbesondere zumindest langfristig - konstant gehalten werden.

Sinkt ausgehend von FIG 1 beispielsweise der Umgebungsdruck 12 (bei sonst gleichbleibenden Bedingungen) ab, so wird zunächst der Eingangsdruck 14 kleiner. Dadurch verringert sich die durch den Eingangsdruck 14 von links auf das Flächenelement 20 wirkende Kraft, sodass sich die Gleichgewichtslage des als Membran 22 ausgebildeten Flächenelements 20 etwas nach links verschiebt (d. h. die Wölbung der Membran 22 in FIG 1 nimmt zu). Durch diese Bewegung der Membran 22 wird das Ventil 18 etwas mehr geöffnet. Auf diese Weise wird der Strömungswiderstand des Ventils 18 verringert. Durch das teilweise Öffnen des Ventils 18 steigt der Eingangsdruck 14 wieder an. Nach einer gewissen Zeit (insbesondere im SekundenBereich oder weniger) oder instantan stellt sich ein neues Gleichgewicht ein, bei welchem der ursprüngliche Druckunterschied zwischen dem Eingangsdruck 14 und dem Ausgangsdruck 16 wieder hergestellt ist. Auf diese Weise kann der Druckunterschied zwischen dem Eingangsdruck 14 und dem Ausgangsdruck 16 - zumindest im Wesentlichen, insbesondere zumindest langfristig - konstant gehalten werden.

Sinkt der Umgebungsdruck 12 jedoch unter den vorgegebenen Grenzwert (beispielsweise bei in einem Fahrzeug eingebauten Kühlgerät (vgl. FIG 6) bei Stillstand des Fahrzeugs), so ist das Ventil 18 in seiner maximal geöffneten Stellung und kann nicht weiter öffnen. Der Umgebungsdruck 12 ist nicht groß genug, um die Strömungswiderstände von dem Ventil 18 und von der Temperiereinheit 8 zu überwinden. In diesem Fall kann keine Strömung von Luft durch den Kanal 6 hindurch erfolgen. Das heißt, dass beim Absinken des Umgebungsdrucks 12 unter den vorgegebenen Grenzwert die Luftströmung durch den Kanal 6 hindurch zum Erliegen kommt.

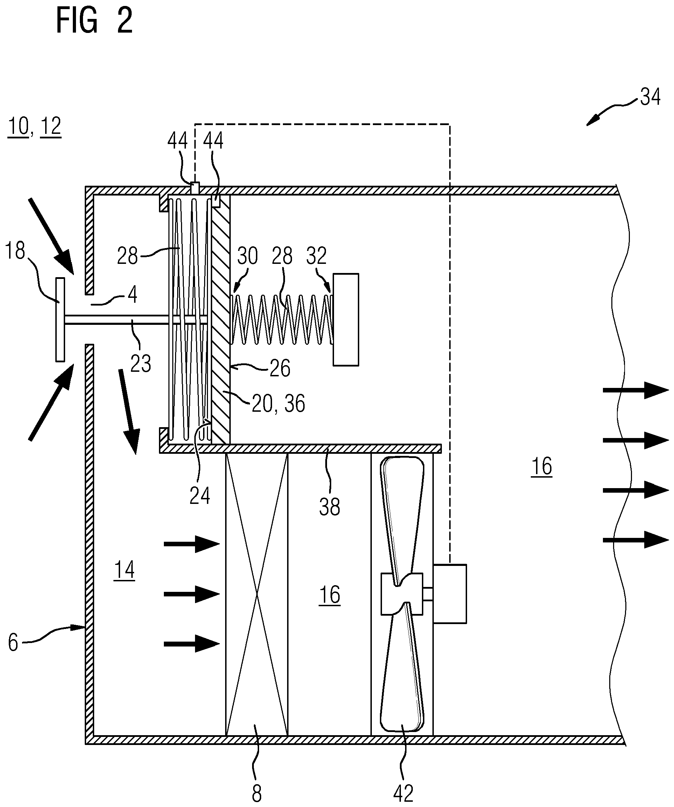

In dem Kühlgerät kann ein Lüfter vorgesehen werden (vgl. FIG 2), um die Strömungswiderstände auch bei einem Umgebungsdruck unterhalb des Grenzwertes überwinden zu können.

FIG 2 zeigt schematisch ein weiteres Kühlgerät 34 für ein Fahrzeug.

Die nachfolgende Beschreibung beschränkt sich im Wesentlichen auf die Unterschiede zum Ausführungsbeispiel aus FIG 1, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

In diesem Ausführungsbeispiel ist das Flächenelement 20 als Kolben 36 ausgebildet.

Das Kühlgerät 34 umfasst einen Zylinder 38, in dem der Kolben 36 beweglich angeordnet ist. Der Kolben 36 kann sich in Längsrichtung des Zylinders 38 bewegen.

Das als Kolben 36 ausgebildete Flächenelement 20 ist unter Verwendung von zwei Federn 28 beweglich positioniert. In diesem Beispiel ist eine der Federn 28 in demjenigen Bereich angeordnet, in dem der Ausgangsdruck 16 anliegt, und die andere Feder 28 in demjenigen Bereich angeordnet, in dem der Eingangsdruck 14 anliegt.

Diejenige Feder 28, die in demjenigen Bereich angeordnet ist, in dem der Eingangsdruck 14 anliegt, (kurz: die im Eingangsdruck 14 angeordnete Feder 28) ist in den Zylinder 38 eingelegt.

Diejenige Feder 28, die in demjenigen Bereich angeordnet ist, in dem der Ausgangsdruck 16 anliegt, (kurz: die im Ausgangsdruck 16 angeordnete Feder 28) ist an seinem ersten Ende 30 mit dem Flächenelement 20 verbunden und an seinem dem ersten Ende 30 entgegengesetzten zweiten Ende 32 räumlich fixiert.

Prinzipiell könnte die im Ausgangsdruck 16 angeordnete Feder 28 auch in den Zylinder eingelegt sein. Weiter könnte die im Eingangsdruck 14 angeordnete Feder 28 auch einerseits mit dem Flächenelement verbunden sein und andererseits (beispielsweise mittels des Zylinders 38) räumlich fixiert sein.

Beide Federn 28 können gespannt sein. Dabei verlaufen die rückstellenden Kräfte der Federn 28 vorzugsweise parallel zueinander. In diesem Beispiel können beide Federn 28 beispielsweise gestaucht sein, d. h. unter Druckspannung stehen. Prinzipiell können die Federn 28 aber auch nicht vorgespannt sein.

Prinzipiell könnte das als Kolben 36 ausgebildete Flächenelement 20 auch - in Analogie zu FIG 1 - unter Verwendung von einer einzigen Feder 28 beweglich positioniert sein.

Auf das als Kolben 36 ausgebildete Flächenelement 20 wirken die Federkräfte der beiden Federn 28 und von dem Eingangsdruck 14 und dem Ausgangsdruck 16 verursachte (Druck-)Kräfte. In diesem Beispiel wirken die Federkraft der im Bereich des Ausgangsdrucks 16 angeordneten Feder 28 und die Druckkraft des Ausgangsdrucks 16 gegen die Federkraft der im Bereich des Eingangsdrucks 14 angeordneten Feder 28 und die Druckkraft des Eingangsdrucks 14.

Die auf den Kolben 36 wirkenden Kräfte können - wie hier dargestellt - eine Positionierung des Kolbens 36 innerhalb des Zylinders 38 bewirken. Zweckmäßigerweise ist die Position des Kolbens 36 abhängig von der Stärke der auf den Kolben 36 wirkenden Kräfte.

Da das als Kolben 36 ausgebildete Flächenelement 20 mit dem Ventil 18 (mechanisch) gekoppelt ist, hängt die Stellung des Ventils 18 von den auf das Flächenelement 20 wirkenden Kräften ab.

Zwischen den auf das Flächenelement 20 wirkenden Kräften stellt sich ein Gleichgewicht ein bzw. herrscht ein Gleichgewicht, sodass ein Druckunterschied zwischen dem Eingangsdruck 14 und dem Ausgangsdruck 16 konstant bleibt, falls der Umgebungsdruck 12 über dem vorgegebenen Grenzwert liegt.

Das Gleichgewicht stellt sich in FIG 2 derart ein, dass eine Summe aus der Federkraft der im Bereich des Ausgangsdrucks 16 angeordneten Feder 28 und der Druckkraft des Ausgangsdrucks 16 genau so groß ist wie eine Summe aus der Federkraft der im Bereich des Eingangsdrucks 14 angeordneten Feder 28 und der Druckkraft des Eingangsdrucks 14.

Das Kräftegleichgewicht lässt sich als Formel wie folgt formulieren:

$$c_1 \cdot x_1 \; + \; p_2 \cdot A \; = \; c_2 \cdot x_2 \; + \; p_3 \cdot A,$$

wobei $c_1$ die Federkonstante des im Bereich des Eingangsdrucks 14 angeordneten Feder 28, $x_1$ die Auslenkung dieser Feder 28, $p_2$ der Eingangsdruck 14 und A der Flächeninhalt einer Seite des Flächenelements 20 ist. Weiter ist $c_2$ die Federkonstante des im Bereich des Ausgangsdrucks 16 angeordneten Feder 28, $x_2$ die Auslenkung dieser Feder 28 und $p_3$ der Ausgangsdruck 16.

Aus der oben genannten Formel für das Kräftegleichgewicht kann der Druckunterschied $\Delta p$ zwischen dem Eingangsdruck $p_2$ 14 und dem Ausgangsdruck $p_3$ 16 berechnet werden:

$$\Delta p \; = \; p_3 \; - \; p_2 \; = \; (c_1 \cdot x_1 \; - \; c_2 \cdot x_2)/A$$

Da der Strömungswiderstand der Temperiereinheit konstant ist, kann ein konstanter Druckabfall über der Temperiereinheit angenommen werden. Die Auslenkungen $x_1$, $x_2$ der beiden Federn 28 stellen sich entsprechend ein. Auf diese Weise werden die Druckverhältnisse im Kanal mittels der Anordnung aus dem Flächenelement 20 und den beiden Federn 28 selbstständig reguliert.

Beispielsweise können der Umgebungsdruck 12 bei 6000 Pa, der Eingangsdruck $p_2$ 14 bei 1500 Pa und der Ausgangsdruck $p_3$ 16 bei 1000 Pa liegen.

Die auf den Kolben 36 wirkenden Kräfte bewirken eine Positionierung des Kolbens 36 im Zylinder 38. Zweckmäßigerweise ist die Position des Kolbens 36 abhängig von der Stärke der auf den Kolben 36 wirkenden Kräfte - also von den Federkräften der Federn 28 und den durch den Eingangsdruck 14 und den Ausgangsdruck 16 bewirkten Druckkräften.

Das Kühlgerät 34 weist einen Lüfter 42 auf, der im Kanal 6 in Strömungsrichtung nach der Temperiereinheit 8 angeordnet ist. Der Lüfter 42 ist zuschaltbar, insbesondere falls der Umgebungsdruck 12 niedriger ist als der vorgegebene Grenzwert.

Falls der Umgebungsdruck höher ist als der vorgegebene Grenzwert, ist vorzugsweise der Lüfter 42 deaktiv, d. h. nicht zugeschaltet. Auf diese Weise kann Energie gespart werden.

In FIG 2 liegt der Umgebungsdruck über dem vorgegebenen Grenzwert. Der Lüfter 42 ist deaktiv. Folglich herrscht in Strömungsrichtung nach der Temperiereinheit der Ausgangsdruck 16. Das heißt, dass sowohl zwischen der Temperiereinheit 8 und dem Lüfter 42 als auch in Strömungsrichtung nach dem Lüfter 42 der Ausgangsdruck 16 herrscht.

Steigt ausgehend von FIG 2 beispielsweise der Umgebungsdruck 12 (bei sonst gleichbleibenden Bedingungen) an, so wird zunächst der Eingangsdruck 14 größer. Dadurch vergrößert sich die durch den Eingangsdruck 14 von links auf das Flächenelement 20 wirkende Kraft, sodass sich die Gleichgewichtslage des Kolbens 36 etwas nach rechts verschiebt (d. h. die Ausdehnung der im Ausgangsdruck 16 angeordneten Feder 28 verringert sich, die Ausdehnung der im Eingangsdruck 14 angeordneten Feder 28 vergrößert sich). Durch die Bewegung des Kolbens 36 wird das Ventil 18 etwas mehr geschlossen. Auf diese Weise wird der Strömungswiderstand des Ventils 18 erhöht. Durch das teilweise Schließen des Ventils 18 sinkt der Eingangsdruck 14 wieder ab. Nach einer gewissen Zeit (insbesondere im Sekunden-Bereich oder weniger) oder instantan stellt sich auf diese Weise ein neues Gleichgewicht ein, bei welchem der ursprüngliche Druckunterschied zwischen dem Eingangsdruck 14 und dem Ausgangsdruck 16 wieder hergestellt ist.

Auf analoge Weise regelt sich der Druckunterschied bei sinkendem Umgebungsdruck 12, solange der Umgebungsdruck über dem Grenzwert liegt.

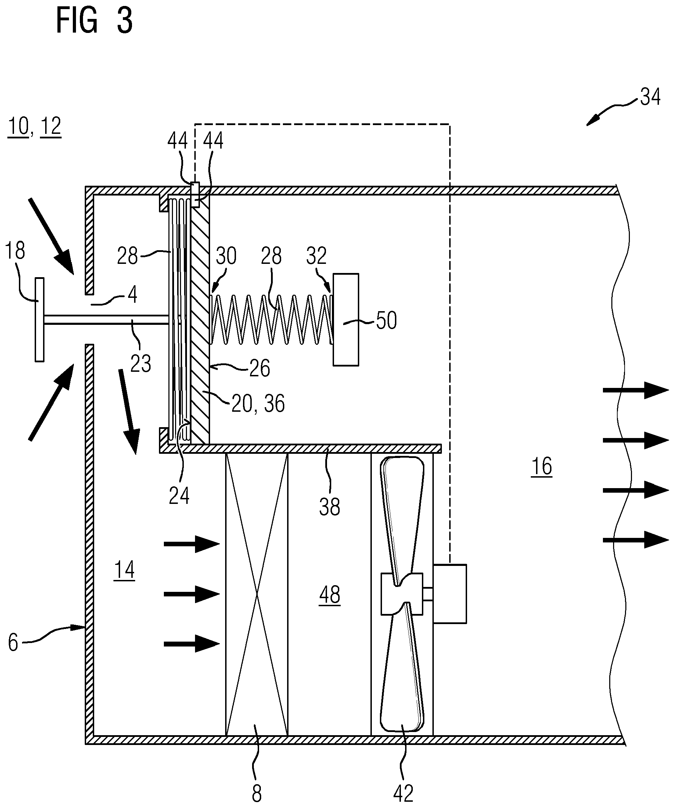

Sinkt der Umgebungsdruck 12 jedoch unter den vorgegebenen Grenzwert (beispielsweise bei in einem Fahrzeug eingebauten Kühlgerät (vgl. FIG 6) bei Stillstand des Fahrzeugs), so ist das Ventil 18 in seiner maximal geöffneten Stellung (d. h. in der Offenstellung) und kann nicht weiter öffnen (vgl. FIG 3). Der Umgebungsdruck 12 ist nicht groß genug, um die Strömungswiderstände von dem Ventil 18 und von der Temperiereinheit 8 zu überwinden. In diesem Fall kann von sich aus keine Strömung von Luft durch den Kanal 6 hindurch erfolgen.

Es kann detektiert werden, ob das Ventil 18 in seiner Offenstellung, d. h. maximal geöffneten Stellung, ist. Hierzu weisen das als Kolben 36 ausgebildete Flächenelement 20 und der Zylinder 38 Kontakte 44 auf. Die Kontakte 44 sind derart positioniert, dass sie in der Offenstellung des Ventils 18 schließen (vgl. FIG 3).

Weiter kann das Kühlgerät 34 eine Umluftöffnung aufweisen (nicht gezeigt), um Umluft in den Kanal 6 zu führen. In diesem Falle könnte das Kühlgerät 34 nicht nur mit Frischluft, sondern zusätzlich auch mit Umluft arbeiten.

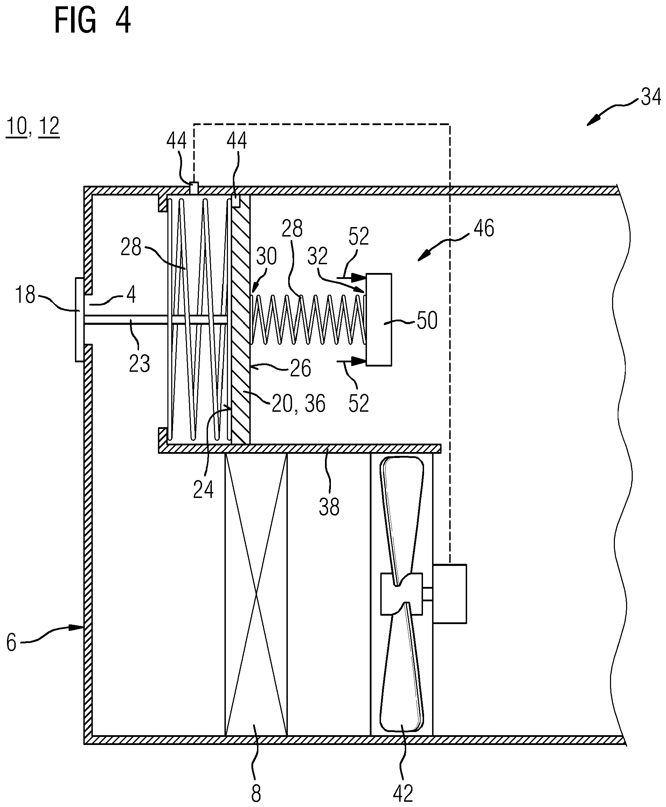

Das Kühlgerät weist weiter eine Schließvorrichtung 46 auf (vgl. FIG 4). Die Einlassöffnung 4 ist unter Verwendung der Schließvorrichtung 46 verschließbar, insbesondere falls das Kühlgerät 34 außer Betrieb ist.

In FIG 3 ist das Kühlgerät 34 aus FIG 2 gezeigt, wobei der Umgebungsdruck 12 unterhalb des Grenzwerts liegt.

Das Ventil 18 befindet sich in seiner Offenstellung. Folglich ist der Kolben 36 maximal zeichnungsgemäß nach links verschoben. Die Kontakte 44 des Kolbens 36 und des Zylinders 38 berühren sich. Auf diese Weise wird ein Signal an den Lüfter 42 übertragen und der Lüfter wird zugeschaltet.

Kurz: Falls der Umgebungsdruck niedriger ist als der vorgegebene Grenzwert, wird der Lüfter 42 zugeschaltet, d. h. aktiviert.

Der Lüfter kann den Druckabfall, der durch den Strömungswiederstand von dem Ventil 18 und der Temperiereinheit 8 entsteht, ausgleichen.

Der zugeschaltete Lüfter 42 verrichtet Arbeit, sodass sich zwischen der Temperiereinheit 8 und dem Lüfter 42 einen Niedrigdruck 48 bildet, der gegenüber dem in Strömungsrichtung jetzt nach dem Lüfter 42 herrschenden Ausgangsdruck 16 verringert ist.

Auf diese Weise kann der Druckabfall über der Temperiereinheit 8 aufrecht gehalten werden. Insbesondere kann auf diese Weise ein Druckunterschied zwischen dem Eingangsdruck 14 und dem Niedrigdruck 48 (insbesondere statt dem Ausgangsdruck 16) aufrecht gehalten werden.

Da durch den Lüfter 42 der Ausgangsdruck nicht herabgesetzt wird, bleibt das Ventil 18 in seiner Offenstellung.

Auf diese Weise kann eine Luftströmung durch den Kanal 6 hindurch aufrecht gehalten werden. Insbesondere wird die Luftströmung durch den Kanal 6 hindurch mittels des Lüfters 42 erzwungen, insbesondere obwohl der Umgebungsdruck 12 unterhalb des vorgegebenen Grenzwerts liegt.

In FIG 4 ist das Kühlgerät 34 aus FIG 2 gezeigt, wobei das Kühlgerät 34 außer Betrieb ist und die Einlassöffnung 4 unter Verwendung der Schließvorrichtung 46 verschlossen ist.

Das zweite, räumlich fixierte Ende 32 der im Ausgangsdruck 16 angeordneten Feder 28 ist mit einem Fixierungselement 50 verbunden. Während des Betriebs des Kühlgeräts 34 ist das Fixierungselement 50 räumlich fixiert. Das heißt, dass sich während des Betriebs des Kühlgeräts 34 die Lage des Fixierungselements 50 bezüglich des Kanals 6 nicht ändert. Auf diese Weise verbleibt die Lage des zweiten Endes 32 der im Ausgangsdruck 16 angeordneten Feder 28 bezüglich des Kanals 6 während des Betriebs des Kühlgeräts 34 unverändert, d. h. fix.

Die Schließvorrichtung 46 wird bei der Deaktivierung des Kühlgeräts 34 aktiviert. Bei der Aktivierung der Schließvorrichtung 46 wird mittels der Schließvorrichtung 46 das Fixierungselement 50 von der Einlassöffnung 4 weg, d. h. zeichnungsgemäß nach rechts, verschoben. Das Verschieben des Fixierungselements 50 ist durch Pfeile 52 dargestellt.

Durch das Verschieben des Fixierungselements 50 wird auch das mit dem Fixierungselement 50 verbundene Ende 32 der im Ausgangsdruck 16 angeordneten Feder 28 von der Einlassöffnung 4 weg, d. h. zeichnungsgemäß nach rechts, verschoben. Die zeichnungsgemäß von rechts auf das Flächenelement 20 wirkende Federkraft wird dadurch reduziert, sodass das Flächenelement 20 ebenfalls zeichnungsgemäß ein Stück nach rechts, d. h. weg von der Einlassöffnung 4, verschoben wird. Die Verschiebung ist so weit, dass das mit dem Flächenelement 20 verbundene Ventil 18 in seine Geschlossenstellung gebracht wird, d. h. geschlossen wird. In der Geschlossenstellung verschließt das Ventil 18 die Einlassöffnung 4.

Auf diese Weise kann die Einlassöffnung 4 unter Verwendung der Schließvorrichtung 46 geschlossen werden.

Wenn das Ventil 18 - und damit die Einlassöffnung 4 - geschlossen ist, dann wird - wenn das Kühlgerät 34 in ein Fahrzeug eingebaut ist (vgl. FIG 6) - ein bei der Fahrt des Fahrzeugs durch das Ventil 18 und/oder die Einlassöffnung 4 entstehender Strömungswiderstand reduziert. Auf diese Weise kann die benötigte Energie zum Antrieb des Fahrzeugs reduziert werden.

FIG 5 zeigt ein anderes Ventil 54 für das Kühlgerät 2 aus FIG 1 oder für das weitere Kühlgerät 34 aus FIG 2.

Das Ventil 54 kann anstelle des in FIG 1 gezeigten Ventils 18 und/oder anstelle des in den FIGuren 2 bis 4 gezeigten Ventils 18 treten.

Beispielshaft ist das Ventil 54 in FIG 5 an der Einlassöffnung des Kühlgeräts 34 aus FIG 2 angeordnet.

Das Ventil 54 weist ein Luftleitelement 56 auf. Das Luftleitelement 56 ist gekrümmt. Auf diese Weise kann das Luftleitelement 56 Luft umleiten.

Das Luftleitelement 56 ist dazu eingerichtet, an der Einlassöffnung 4 entlang strömende Luft in den Kanal 6 hineinzuführen. Das heißt, dass mittels dem Luftleitelement an der Einlassöffnung entlang strömende Luft in den Kanal hineingeführt werden kann.

Das heißt, mittels des Luftleitelements 56 wird Luft, welche an der Einlassöffnung 4 entlang strömt (Pfeil 58), derart umgeleitet (gestichelter Pfeil 60), dass sie durch die Einlassöffnung 4 hindurch in den Kanal 6 hineingeführt wird.

Auf diese Weise kann der Strömungswiderstand des Ventils 54 verringert werden.

Auf diese Weise kann außerdem ein geringerer Grenzwert vorgegeben/gewählt werden.

FIG 6 zeigt schematisch ein als Schienenfahrzeug ausgebildetes Fahrzeug 62 mit dem Kühlgerät 34 aus FIG 2. Das Fahrzeug 62 könnte prinzipiell auch ein andere Fahrzeug sein, beispielsweise ein PKW, ein LKW, ein Schiff, ein Flugzeug oder ähnliches.

Wenn das Fahrzeug 62 (insbesondere genügend schnell) fährt, dann steigt der von außen an die Einlassöffnung 4 anliegende Umgebungsdruck 12 über den vorgegebenen Grenzwert.

Luft aus der Umgebung 10 wird durch das an der Einlassöffnung 4 angeordnete Ventil 18 in den Kanal 6 des hier als Klimaanlage ausgeführten Kühlgeräts 34 geführt (vgl. FIG 2).

Die mittels der Temperiereinheit 8 temperierte Luft wird dann über die Auslassöffnung 64 in einen Innenraum 66 des Fahrzeugs 62 geführt.

Prinzipiell könnte das Kühlgerät 34 auch als Kühlgerät für eine technische Einheit des Fahrzeugs 62, hier beispielsweise für einen Stromrichter und/oder für einen Transformator des als Schienenfahrzeug ausgebildeten Fahrzeugs 62, ausgebildet sein. In diesem Fall würde die Temperiereinheit 8 die technische Einheit kühlen (nicht dargestellt). Im Fall der Kühlung einer technischen Einheit kann die Luft aus dem Kanal 6 über den Auslass - anstatt in den Innenraum 66 des Fahrzeugs 62 - wieder in die Umgebung 10 gelangen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den in den Ansprüchen definierten Schutzumfang der Erfindung zu verlassen.

**Patentansprüche**

1. Kühlgerät (2, 34) für ein Fahrzeug (62),

   welches eine Einlassöffnung (4), einen Kanal (6) und eine im Kanal (6) angeordnete Temperiereinheit (8) aufweist, wobei eine Strömungsrichtung für Luft durch den Kanal (6) hindurch vorgegeben ist, wobei an der Einlassöffnung (4) von außen ein Umgebungsdruck (12) anliegt, im Kanal (6) in Strömungsrichtung vor der Temperiereinheit (8) ein Eingangsdruck (14) herrscht und im Kanal (6) in Strömungsrichtung nach der Temperiereinheit (8) ein Ausgangsdruck (16) herrscht,
   wobei ferner ein an der Einlassöffnung (4) angeordnetes Ventil (18, 54) und ein mit dem Ventil (18, 54) mechanisch gekoppeltes Flächenelement (20) vorgesehen sind und
   das Flächenelement (20) unter Verwendung zumindest einer Feder (28) derart beweglich positioniert ist, dass das mit dem Flächenelement (20) gekoppelte Ventil (18) zwischen einer Offenstellung und einer Geschlossenstellung stufenlos verstellbar ist,
   **dadurch gekennzeichnet, dass**
   an einer Seite (24) des Flächenelements (20) der Eingangsdruck (14) und an der anderen Seite (26) des Flächenelements (20) der Ausgangsdruck (16) anliegt.

2. Kühlgerät (2, 34) nach Anspruch 1,
   **dadurch gekennzeichnet, dass**
   zwischen den auf das Flächenelement (20) wirkenden Kräften ein Gleichgewicht herrscht, sodass ein Druckunterschied zwischen dem Eingangsdruck (14) und dem Ausgangsdruck (16) zumindest im Wesentlichen konstant bleibt, falls der Umgebungsdruck (12) über einem vorgegebenen Grenzwert liegt.

3. Kühlgerät (2, 34) nach Anspruch 1 oder 2,
   **dadurch gekennzeichnet, dass**
   die Stellung des Ventils (18, 54) von den auf das Flächenelement (20) wirkenden Kräften abhängt.

4. Kühlgerät (2, 34) nach einem der vorhergehenden Ansprüche, **dadurch gekennzeichnet, dass**
   die Stellung des Ventils (18, 54) vom Umgebungsdruck (12) und/oder vom Ausgangsdruck (16) abhängt.

5. Kühlgerät (2, 34) nach einem der vorhergehenden Ansprüche, **dadurch gekennzeichnet, dass**
   das Ventil (18, 54) ein Luftleitelement (56) aufweist, welches dazu eingerichtet ist, an der Einlassöffnung (4) entlang strömende Luft in den Kanal (6) hineinzuführen.

6. Kühlgerät (2) nach einem der vorhergehenden Ansprüche, **dadurch gekennzeichnet, dass**
   das Flächenelement (20) eine Membran (22) ist.

7. Kühlgerät (34) nach einem der Ansprüche 1 bis 5,
   **dadurch gekennzeichnet, dass**
   das Flächenelement (20) ein Kolben (36) ist, der in einem Zylinder (38) beweglich angeordnet ist.

8. Kühlgerät (34) nach einem der vorhergehenden Ansprüche, **dadurch gekennzeichnet, dass**
   das Flächenelement (20) unter Verwendung von zwei Federn (28) beweglich positioniert ist.

9. Kühlgerät (34) nach Anspruch 8,
   **dadurch gekennzeichnet, dass**
   die zwei Federn (28) gespannt sind, wobei die rückstellenden Kräfte der Federn (28) parallel zueinander verlaufen.

10. Kühlgerät (34) nach einem der vorhergehenden Ansprüche, **gekennzeichnet durch**
    einen Lüfter (42), der im Kanal (6) in Strömungsrichtung nach der Temperiereinheit (8) angeordnet ist und der, insbesondere falls der Umgebungsdruck (12) niedriger ist als der vorgegebene Grenzwert, zuschaltbar ist.

11. Kühlgerät (34) nach Anspruch 10,
    **dadurch gekennzeichnet, dass**,
    falls der Umgebungsdruck (12) niedriger ist als ein vorgegebener Grenzwert, der Lüfter (42) zugeschaltet ist, wobei bei zugeschaltetem Lüfter (42) zwischen der Temperiereinheit (8) und dem Lüfter (42) ein Niedrigdruck (48) herrscht, der gegenüber dem in Strömungsrichtung nach dem Lüfter (42) herrschenden Ausgangsdruck (16) verringert ist.

**12.** Kühlgerät (34) nach einem der vorhergehenden Ansprüche, **gekennzeichnet durch**
eine Umluftöffnung, welche dazu eingerichtet ist, Umluft in den Kanal (6) zu führen.

**13.** Kühlgerät (34) nach einem der vorhergehenden Ansprüche, **gekennzeichnet durch**
eine Schließvorrichtung (46), unter Verwendung welcher die Eingangsöffnung (4) verschließbar ist, insbesondere
falls das Kühlgerät (34) außer Betrieb ist.

**14.** Fahrzeug (62), insbesondere Schienenfahrzeug (62), mit einem Kühlgerät (2, 34) nach einem der vorhergehenden
Ansprüche.


**Claims**

**1.** Cooling apparatus (2, 34) for a vehicle (62),

having an inlet opening (4), having a channel (6) and having a temperature-control unit (8) which is arranged
in the channel (6), wherein a flow direction for air through the channel (6) is predefined,
wherein an ambient pressure (12) prevails at the inlet opening (4) from the outside, an entry pressure (14)
prevails in the channel (6) in front of the temperature-control unit (8) in the flow direction, and an exit pressure
(16) prevails in the channel (6) behind the temperature-control unit (8) in the flow direction,
wherein furthermore a valve (18, 54) arranged at the inlet opening (4) and a surface element (20) mechanically
coupled to the valve (18, 54) are provided, and
the surface element (20), through the use of at least one spring (28), is movably positioned in such a way that
the valve (18) coupled to the surface element (20) can be adjusted in a continuously variable manner between
an open position and a closed position,
**characterized in that**
the entry pressure (14) prevails on one side (24) of the surface element (20) and the exit pressure (16) prevails
on the other side (26) of the surface element (20).

**2.** Cooling apparatus (2, 34) according to Claim 1, **characterized in that**
an equilibrium prevails between the forces acting on the surface element (20), so that a pressure difference between
the entry pressure (14) and the exit pressure (16) remains at least substantially constant, if the ambient pressure
(12) lies above a predefined limit value.

**3.** Cooling apparatus (2, 34) according to Claim 1 or 2, **characterized in that**
the position of the valve (18, 54) depends on the forces acting on the surface element (20).

**4.** Cooling apparatus (2, 34) according to one of the preceding claims,
**characterized in that**
the position of the valve (18, 54) depends on the ambient pressure (12) and/or on the exit pressure (16).

**5.** Cooling apparatus (2, 34) according to one of the preceding claims,
**characterized in that**
the valve (18, 54) has an air-guiding element (56) which is configured to guide into the channel (6) air flowing along
the inlet opening (4).

**6.** Cooling apparatus (2) according to one of the preceding claims,
**characterized in that**
the surface element (20) is a diaphragm (22).

**7.** Cooling apparatus (34) according to one of Claims 1 to 5, **characterized in that**
the surface element (20) is a piston (36) which is movably arranged in a cylinder (38).

**8.** Cooling apparatus (34) according to one of the preceding claims,
**characterized in that**
the surface element (20) is movably positioned through the use of two springs (28).

**9.** Cooling apparatus (34) according to Claim 8, **characterized in that**

the two springs (28) are loaded, wherein the restoring forces of the springs (28) are directed parallel to one another.

10. Cooling apparatus (34) according to one of the preceding claims,
**characterized by**
a fan (42) which is arranged in the channel (6) behind the temperature-control unit (8) in the flow direction and which, in particular if the ambient pressure (12) is lower than the predefined limit value, can be activated.

11. Cooling apparatus (34) according to Claim 10, **characterized in that**,
if the ambient pressure (12) is lower than a predefined limit value, the fan (42) is activated, wherein, with the fan (42) activated, a low pressure (48) prevails between the temperature-control unit (8) and the fan (42) and is reduced in relation to the exit pressure (16) prevailing behind the fan (42) in the flow direction.

12. Cooling apparatus (34) according to one of the preceding claims,
**characterized by**
a circulating-air opening which is configured to guide circulating air into the channel (6).

13. Cooling apparatus (34) according to one of the preceding claims,
**characterized by**
a closure apparatus (46), the use of which makes closure of the entry opening (4) possible, in particular if the cooling apparatus (34) is not in operation.

14. Vehicle (62), in particular rail vehicle (62), having a cooling apparatus (2, 34) according to one of the preceding claims.

## Revendications

1. Appareil (2, 34) de refroidissement d'un véhicule (62),

   qui a une ouverture (4) d'entrée, un conduit (6) et une unité (8) de mise en température montée dans le conduit (6), dans lequel il est prescrit un sens d'écoulement de l'air dans le conduit (6), dans lequel il s'applique à l'ouverture (4) d'entrée de l'extérieur une pression (12) ambiante, il règne, dans le conduit (6) dans le sens de l'écoulement avant l'unité (8) de mise en température, une pression (14) d'entrée et il règne, dans le conduit (6) dans le sens de l'écoulement, après l'unité (8) de mise en température, une pression (16) de sortie,
   dans lequel il est prévu en outre une soupape (18, 54) montée sur l'ouverture (4) d'entrée et un élément (20) de surface relié mécaniquement à la soupape (18, 54), et
   l'élément (20) de surface peut, en utilisant au moins un ressort (28), être mis en position de manière mobile, de manière à pouvoir régler en continu la soupape (18) reliée à l'élément (20) de surface entre une position d'ouverture et une position de fermeture,
   **caractérisé en ce qu'**il règne, sur une face (24) de l'élément (20) de surface, la pression (14) d'entrée et sur l'autre face (26) de l'élément (20) de surface, la pression (16) de sortie.

2. Appareil (2, 34) de refroidissement suivant la revendication 1,
**caractérisé en ce qu'**
il règne, entre les forces s'appliquant à l'élément (20) de surface, un équilibre, de manière à ce qu'une différence de pression entre la pression (14) d'entrée et la pression (16) de sortie reste au moins sensiblement constante, si la pression (12) ambiante est supérieure à une valeur limite donnée à l'avance.

3. Appareil (2, 34) de refroidissement suivant la revendication 1 ou 2,
**caractérisé en ce que**
la position de la soupape (18, 54) dépend des forces s'appliquant à l'élément (20) de surface.

4. Appareil (2, 34) de refroidissement suivant l'une des revendications précédentes,
**caractérisé en ce que**
la position de la soupape (18, 54) dépend de la pression (12) ambiante et/ou de la pression (16) de sortie.

5. Appareil (2, 34) de refroidissement suivant l'une des revendications précédentes,
**caractérisé en ce que**
la soupape (18, 54) a un élément (56) de conduite de l'air, qui est conçue pour faire pénétrer dans le conduit (6) de l'air passant dans l'ouverture (4) d'entrée.

6. Appareil (2) de refroidissement suivant l'une des revendications précédentes,
   **caractérisé en ce que**
   l'élément (20) de surface est une membrane (22).

7. Appareil (34) de refroidissement suivant l'une des revendications 1 à 5,
   **caractérisé en ce que** l'élément (20) de surface est un piston (36), qui est monté mobile dans un cylindre (38).

8. Appareil (34) de refroidissement suivant l'une des revendications précédentes,
   **caractérisé en ce que**
   l'élément (20) de surface peut être mis en position, de manière mobile, en utilisant deux ressorts (28).

9. Appareil (34) de refroidissement suivant la revendication 8,
   **caractérisé en ce que**
   les deux ressorts (28) sont bandés, les forces de rappel des ressorts (28) étant parallèles l'une à l'autre.

10. Appareil (34) de refroidissement suivant l'une des revendications précédentes,
    **caractérisé par**
    un ventilateur (42), qui est monté dans le conduit (6), dans le sens de l'écoulement, après l'unité (8) de mise en température, et qui peut être branché dans le cas notamment où la pression (12) ambiante est plus basse que la valeur limite donnée à l'avance.

11. Appareil (34) de refroidissement suivant la revendication 10,
    **caractérisé en ce que**
    si la pression (12) ambiante est plus basse qu'une valeur limite donnée à l'avance, le ventilateur (42) est branché, dans lequel, lorsque le ventilateur (42) est branché, il règne, entre l'unité (8) de mise en température et le ventilateur (42), une pression (48) basse, qui est diminuée par rapport à la pression (16) de sortie régnant après le ventilateur (42) dans le sens de l'écoulement.

12. Appareil (34) de refroidissement suivant l'une des revendications précédentes,
    **caractérisé par**
    une ouverture d'air recirculé, qui est conçue pour faire passer de l'air recirculé dans le conduit (6).

13. Appareil (34) de refroidissement suivant l'une des revendications précédentes,
    **caractérisé par**
    un système (46) de fermeture, par l'utilisation duquel l'ouverture (4) d'entrée peut être fermée, notamment si l'appareil (34) de refroidissement est hors de fonctionnement.

14. Véhicule (62), notamment véhicule (62) sur rail, comprenant un appareil (2, 34) de refroidissement suivant l'une des revendications précédentes.

EP 3 883 835 B1

FIG 1

10, 12

24   26

2

18

30   28   32

4

23

20, 22

16

14

6

8

14

FIG 2

FIG 3

## FIG 4

# FIG 5

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017060032 A1